# FASCICULE DE BREVET EUROPEEN

(11) **EP 3 164 310 B1**
(45) Date de publication et mention de la délivrance du brevet: **15.08.2018**
(21) Numéro de dépôt: 15738738.2
(22) Date de dépôt: 23.06.2015
(51) Int. Cl.: B60W 20/00, B60W 50/02, B60K 6/48, B60K 6/52, B60W 10/02, B60W 10/08

(54) **PROCÉDÉ ET DISPOSITIF DE CONTRÔLE DU COUPLAGE D'ARBRES D'UN VÉHICULE DONT L'UN EST ENTRAÎNÉ PAR UNE MACHINE, PAR AJOUT D'UN COUPLE ADDITIONNEL MONOTONE**
VERFAHREN UND VORRICHTUNG ZUR STEUERUNG DER KOPPLUNG VON WELLEN EINES FAHRZEUGS, VON DENEN EINE ÜBER EINE MASCHINE GESTEUERT IST, DURCH ZUGABE EINES ZUSÄTZLICHEN MONOTONEN DREHMOMENTS
METHOD AND DEVICE FOR CONTROLLING THE COUPLING OF SHAFTS OF A VEHICLE, ONE OF WHICH IS DRIVEN BY A MACHINE, BY ADDING AN ADDITIONAL MONOTONE TORQUE

(30) Priorité: 03.07.2014 FR 1456358
(43) Date de publication de la demande: 10.05.2017
(73) Titulaire: Technoboost, 75116 Paris (FR)
(72) Inventeur: DESCHAMPS, Alexandre, F-78530 Buc (FR); SCHAEFFER, Eric, F-75013 Paris (FR)
(74) Mandataire: Rosenberg, Muriel Sylvie
(86) Numéro de dépôt international: PCT/FR2015/051669
(87) Numéro de publication internationale: WO 2016/001519

(56) Documents cités:
- WO-A1-2011/076513
- FR-A1- 2 954 441
- US-A- 5 827 148
- US-A- 6 008 606
- US-A1- 2014 144 744

## Description

L'invention concerne le couplage entre deux arbres d'un véhicule, dont l'un est entraîné par une machine associée à des moyens de stockage d'énergie.

Dans ce qui suit, on entend par « véhicule » aussi bien un véhicule comprenant un groupe motopropulseur (ou GMP) tout électrique (c'est-à-dire ne comportant qu'au moins une machine électrique), qu'un véhicule comprenant un groupe motopropulseur hybride (c'est-à-dire comportant au moins un moteur thermique et au moins une machine (ou moteur), électrique ou hydraulique ou à volant d'inertie ou encore à air comprimé, associé(e) à des moyens de stockage d'énergie).

Dans les véhicules du type de ceux définis ci-avant, et éventuellement de type automobile, la machine qui est associée à des moyens de stockage d'énergie est notamment chargée de produire du couple destiné à permettre leur déplacement. Plus précisément, un premier arbre est entraîné en rotation par la machine, un second arbre est chargé d'entraîner en rotation certaines au moins des roues, et des moyens de couplage sont chargés de coupler le premier arbre au second arbre afin que le couple produit par la machine serve à entraîner les roues. Le document US 5 827 148 décrit un procédé de couplage tel que défini par le préambule de la revendication 1. Les moyens de couplage précités comprennent généralement un synchroniseur qui est actionné par une fourchette, elle-même actionnée par un actionneur. Ce synchroniseur peut, par exemple, comprendre au moins :
- un moyeu solidarisé en rotation au premier arbre,
- un manchon (ou baladeur) monté en translation sur le moyeu,
- une éventuelle bague de synchronisation comprenant une partie conique femelle propre à être couplée à une partie conique mâle d'une couronne à crabots d'un pignon solidarisé fixement au second arbre, et
- un mécanisme d'armement installé entre une face interne du manchon et une face externe du moyeu, et destiné à translater l'éventuelle bague de synchronisation pour la coupler à la couronne à crabots du pignon lorsque le manchon est translaté par la fourchette associée.

Lorsque l'on veut coupler le premier arbre au second arbre, on procède comme suit.

Dans une première étape, on fait fonctionner la machine afin qu'elle entraîne le premier arbre selon sensiblement un régime de consigne, puis on agit sur les moyens de couplage afin qu'ils débutent un couplage avec le second arbre. En présence du synchroniseur décrit ci-avant, le début du couplage consiste à translater légèrement le manchon par rapport au moyeu (en translatant la fourchette associée) pour contraindre le mécanisme d'armement à translater la bague de synchronisation afin de la coupler à la couronne à crabots du pignon pour la synchroniser avec le second arbre.

Dans une seconde étape, on fait fonctionner la machine afin qu'elle fournisse un couple de consigne choisi, et l'on agit sur les moyens de couplage afin qu'ils établissent un couplage entre les premier et second arbres. En présence du synchroniseur décrit ci-avant, ce dernier couplage consiste à poursuivre la translation du manchon par rapport au moyeu (en translatant la fourchette associée) pour décaler angulairement la bague de synchronisation BS (phase dite de « dévirage »), puis à coupler étroitement le manchon à la couronne à crabots du pignon (phase dite de « crabotage »).

Comme le sait l'homme de l'art, le couple de consigne étant généralement choisi sensiblement égal à un couple de trainée (ou de frottement) de la machine qui est estimé par un calculateur du véhicule, il peut parfois s'avérer surestimé ou sous-estimé, ce qui conduit à une impossibilité de réaliser le couplage entre les premier et second arbres, et donc à un arrêt du déplacement de la fourchette et de son actionneur.

Pour que la situation précitée ne survienne pas trop fréquemment, il est possible de sur-dimensionner les moyens de couplage afin de les rendre notablement plus robustes et ainsi faciliter les dévirages et crabotages lorsque le couple de trainée est surestimé ou sous-estimé. Mais cette solution s'avère onéreuse.

On peut également augmenter ou diminuer le couple de consigne d'une valeur prédéfinie, comme décrit dans le document brevet US 5,827,148. Mais rien ne garantit que le nouveau couple de consigne (augmenté ou diminué) compense effectivement le couple de trainée (ou de frottement) de la machine à l'instant considéré. Par conséquent, dans de nombreuses situations cette solution s'avère inutile.

L'invention a donc notamment pour but d'améliorer la situation.

Elle propose notamment à cet effet un procédé, destiné à permettre le contrôle du couplage, par des moyens de couplage d'un véhicule, d'un premier arbre, entraîné par une machine associée à des moyens de stockage d'énergie et produisant un couple, à un second arbre, propre à entraîner en rotation des roues du véhicule, et comprenant une étape (i) dans laquelle on fait fonctionner la machine afin qu'elle entraîne le premier arbre selon sensiblement un régime de consigne, puis on agit sur les moyens de couplage afin qu'ils débutent un couplage avec le second arbre, et une étape (ii) dans laquelle on fait fonctionner la machine afin qu'elle fournisse un couple de consigne choisi et l'on agit sur les moyens de couplage afin qu'ils établissent un couplage entre les premier et second arbres.

Ce procédé se caractérise par le fait que dans l'étape (ii), lorsque les moyens de couplage ne parviennent pas à établir le couplage, on ajoute au couple de consigne un couple additionnel variant soit de façon monotone décroissante à partir d'une valeur positive choisie, soit de façon monotone croissante à partir d'une valeur négative choisie, jusqu'à ce que le couple fourni permette une reprise du couplage, puis on maintient sensiblement constant ce couple fourni jusqu'à ce que le couplage soit effectivement terminé.

Grâce à cet ajout au couple de consigne d'un couple additionnel qui varie soit de façon monotone décroissante à partir d'une valeur positive choisie, soit de façon monotone croissante à partir d'une valeur négative choisie, on est certain de parvenir rapidement à une valeur de couple fourni permettant la poursuite et la fin du couplage.

Le procédé selon l'invention peut comporter d'autres caractéristiques qui peuvent être prises séparément ou en combinaison, et notamment :
- dans l'étape (ii) on peut utiliser un couple de consigne qui est propre à compenser un couple de trainée estimé de la machine ;
- dans un premier mode de réalisation, dans l'étape (ii) on peut faire varier le couple additionnel selon une pente sensiblement constante ;
   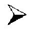 dans l'étape (ii), la pente peut varier en fonction du couple de consigne ;
- dans un second mode de réalisation, dans l'étape (ii) on peut faire varier le couple additionnel par incrémentation d'un incrément choisi ;
   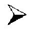 dans l'étape (ii) l'incrément peut varier en fonction du couple de consigne ;
- dans l'étape (ii) la valeur choisie (positive ou négative) peut varier en fonction du couple de consigne ;
- dans l'étape (ii) on peut détecter que les moyens de couplage ne parviennent pas à établir le couplage en cas de réception de données qui sont représentatives d'un arrêt de déplacement d'un élément participant à l'action sur les moyens de couplage.

L'invention propose également un dispositif, destiné à contrôler le couplage, par des moyens de couplage d'un véhicule, d'un premier arbre, entraîné par une machine associée à des moyens de stockage d'énergie et produisant un couple, à un second arbre, propre à entraîner en rotation des roues du véhicule, et agencé pour délivrer des instructions propres à faire fonctionner la machine de sorte qu'elle entraîne le premier arbre selon sensiblement un régime de consigne, puis à déclencher une action sur les moyens de couplage propre à les faire débuter un couplage avec le second arbre, puis à faire fonctionner la machine de sorte qu'elle fournisse un couple de consigne choisi et à déclencher une action sur les moyens de couplage propre à les faire établir un couplage entre les premier et second arbres.

Ce dispositif se caractérise par le fait qu'il est en outre agencé, lorsque les moyens de couplage ne parviennent pas à établir le couplage, pour imposer un ajout au couple de consigne d'un couple additionnel variant soit de façon monotone décroissante à partir d'une valeur positive choisie, soit de façon monotone croissante à partir d'une valeur négative choisie, jusqu'à ce que le couple fourni permette une reprise du couplage, puis pour ordonner un maintien sensiblement constant de ce couple fourni jusqu'à ce que le couplage soit effectivement terminé.

L'invention propose également un véhicule, éventuellement de type automobile, et comprenant un premier arbre entraîné par une machine associée à des moyens de stockage d'énergie et produisant un couple, un second arbre propre à entraîner en rotation des roues, des moyens de couplage propres à coupler le premier arbre au second arbre, et un dispositif de contrôle du type de celui présenté ci-avant.

Un tel véhicule peut être éventuellement de type hybride.

D'autres caractéristiques et avantages de l'invention apparaîtront à l'examen de la description détaillée ci-après, et des dessins annexés, sur lesquels :
- la figure 1 illustre schématiquement et fonctionnellement un véhicule comprenant un groupe motopropulseur hybride et un superviseur de groupe motopropulseur équipé d'un dispositif de contrôle selon l'invention, et
- la figure 2 illustre schématiquement au sein de trois diagrammes des exemples de courbes d'évolution temporelle de la position (P_{A}) de l'actionneur (A) des moyens de couplage (MC), du régime (R_{ME}) de la machine (ME), et du couple de consigne (C_{ME}) de la machine (ME).

L'invention a notamment pour but de proposer un procédé de contrôle, et un dispositif de contrôle D associé, destinés à permettre le contrôle du couplage, par des moyens de couplage MC d'un véhicule V, d'un premier arbre A1, entraîné par une machine ME associée à des moyens de stockage d'énergie MS, à un second arbre A2, propre à entraîner en rotation des roues du véhicule V.

Dans ce qui suit, on considère, à titre d'exemple non limitatif, que le véhicule V est de type automobile. Il s'agit par exemple d'une voiture. Mais l'invention n'est pas limitée à ce type de véhicule. Elle concerne en effet tout véhicule comprenant au moins une machine associée à des moyens de stockage d'énergie et destinée à entraîner certaines au moins des roues servant à le déplacer. Par conséquent, l'invention concerne tous les véhicules terrestres pouvant se mouvoir au moyen de roues (avec ou sans pneus).

Par ailleurs, on considère dans ce qui suit, à titre d'exemple non limitatif, que la machine ME (qui est associée à des moyens de stockage d'énergie MS) est de type électrique. Mais l'invention n'est pas limitée à ce type de machine. Elle concerne en effet toute machine (ou moteur) capable au moins de produire du couple à partir de l'énergie qui est stockée dans des moyens de stockage d'énergie, et notamment les machines hydrauliques, les machines à volant d'inertie et les machines à air comprimé.

Enfin, on considère dans ce qui suit, à titre d'exemple non limitatif, que le véhicule V est de type hybride et donc qu'il comprend un groupe motopropulseur comportant au moins une machine ME couplée à des moyens de stockage d'énergie MS et au moins un moteur thermique MT. Mais l'invention concerne également les véhicules à groupe motopropulseur tout électrique (c'est-à-dire ne comportant qu'au moins une machine électrique).

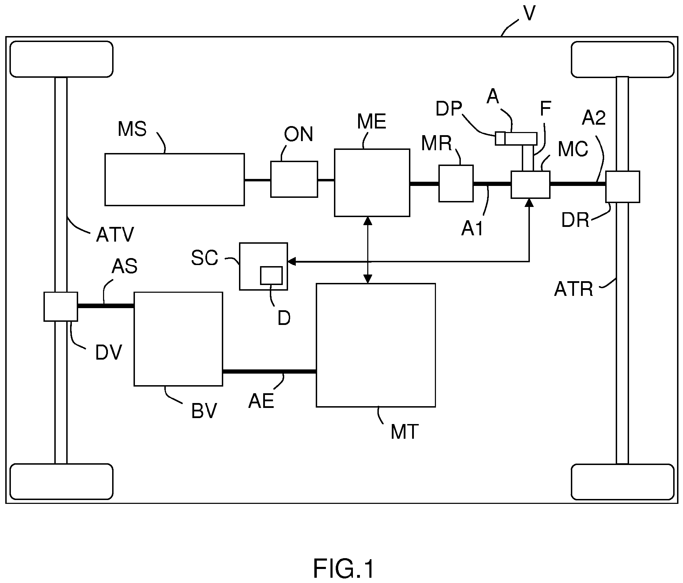

On a schématiquement représenté sur la figure 1 un véhicule V (ici de type hybride) comprenant une chaîne de transmission à groupe motopropulseur hybride, un superviseur (ou calculateur) SC propre à superviser (ou gérer) le fonctionnement de la chaîne de transmission, des moyens de stockage d'énergie MS (par exemple de type haute tension), et un dispositif de contrôle D selon l'invention.

La chaîne de transmission comprend notamment un groupe motopropulseur, comportant (ici) un moteur thermique MT et une machine ME (ici électrique), une boîte de vitesses BV, des moyens de réduction MR, un onduleur ON de type DC/AC, un différentiel avant DV et un différentiel arrière DR.

Le différentiel avant DV est couplé au train avant du véhicule V, tandis que le différentiel arrière DR est couplé au train arrière du véhicule V.

Le moteur thermique MT comprend un vilebrequin (non représenté) qui est par exemple solidarisé fixement à un arbre moteur afin d'entraîner ce dernier en rotation.

La boîte de vitesses BV comprend au moins un arbre d'entrée (ou primaire) AE et au moins un arbre de sortie (ou secondaire) AS destinés à être couplés l'un à l'autre. L'arbre d'entrée AE est destiné à recevoir le couple du moteur thermique MT. L'arbre de sortie AS est destiné à recevoir le couple du moteur thermique MT via l'arbre d'entrée AE afin de le communiquer (ici) à un arbre de transmission avant ATV auquel il est couplé via le différentiel avant DV, et qui est couplé aux roues avant du véhicule V. L'arbre d'entrée AE et l'arbre de sortie AS comprennent chacun des pignons qui sont destinés à participer ensemble de façon sélective à la définition des différentes vitesses (ou rapports) sélectionnables de la boîte de vitesses BV.

On notera que la boîte de vitesses BV peut être de n'importe quel type, et notamment mécanique, automatique ou robotisé.

La machine ME est couplée aux moyens de stockage d'énergie MS via l'onduleur ON et entraîne en rotation un premier arbre A1 muni, par exemple, des moyens de réduction MR. Ce premier arbre A1 peut être couplé à un second arbre A2 via des moyens de couplage MC. Ce second arbre A2 est destiné à recevoir le couple de la machine ME, fourni via le premier arbre A1, afin de le communiquer (ici) à un arbre de transmission arrière auquel il est couplé via le différentiel avant DR, et qui est ici couplé aux roues arrière du véhicule V.

On notera que dans une variante de réalisation la machine ME pourrait produire du couple pour entraîner les roues avant du véhicule V, tandis que le moteur thermique MT pourrait produire du couple pour entraîner les roues arrière du véhicule V. Dans une autre variante de réalisation la machine ME et le moteur thermique MT pourraient produire du couple pour entraîner les roues arrière ou bien les roues avant du véhicule V. Dans cette dernière variante, l'arbre de sortie AS et le second arbre A2 sont couplés à l'arbre de transmission via des moyens d'accouplement (comme par exemple un train épicycloïdal ou un jeu d'engrenages).

Par exemple, les moyens de couplage MC peuvent comprendre un synchroniseur actionné par une fourchette F, elle-même actionnée par un actionneur A. Ce synchroniseur peut, par exemple, comprendre au moins :
- un moyeu solidarisé en rotation au premier arbre A1,
- un manchon (ou baladeur) monté en translation sur le moyeu,
- une bague de synchronisation comprenant une partie conique femelle propre à être couplée à une partie conique mâle d'une couronne à crabots d'un pignon solidarisé fixement au second arbre A2, et
- un mécanisme d'armement installé entre une face interne du manchon et une face externe du moyeu, et destiné à translater la bague de synchronisation pour la coupler à la couronne à crabots du pignon lorsque le manchon est translaté par la fourchette associée.

On notera que le synchroniseur pourrait ne pas comprendre de bague de synchronisation.

Les fonctionnements du moteur thermique MT, de la machine ME et des moyens de couplage MC sont contrôlés par le superviseur SC qui peut se présenter sous la forme d'un calculateur (de préférence dédié).

Comme indiqué précédemment, l'invention propose de contrôler le couplage entre les premier A1 et second A2 arbres au moyen d'un procédé de contrôle. Ce dernier peut être mis en oeuvre par un dispositif de contrôle D.

Dans l'exemple non limitatif illustré sur la figure 1, le dispositif de contrôle D fait partie du superviseur SC. Mais cela n'est pas obligatoire. Ce dispositif (de contrôle) D pourrait en effet être un équipement couplé au superviseur SC, directement ou indirectement. Par conséquent, le dispositif (de contrôle) D peut être réalisé sous la forme de modules logiciels (ou informatiques ou encore « software »), ou bien d'une combinaison de circuits électroniques (ou « hardware ») et de modules logiciels.

Le procédé de contrôle, selon l'invention, comprend des première (i) et seconde (ii) étapes.

La première étape (i) est initiée chaque fois que le superviseur SC veut établir un couplage entre les premier A1 et second A2 arbres afin que des roues (ici arrière) soient entraînées en rotation par le couple produit par la machine ME.

Cette première étape (i) est destinée à synchroniser le régime de rotation du premier arbre A1 sur celui du second arbre A2. Elle est décomposable en deux phases successives.

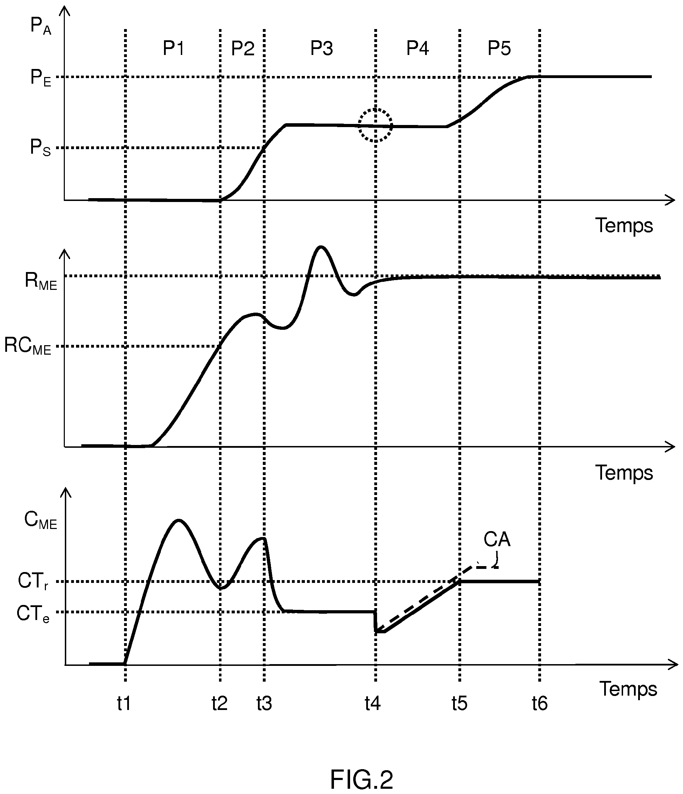

Dans une première phase P1 on fait fonctionner la machine ME afin qu'elle entraîne le premier arbre A1 selon sensiblement un régime de consigne RC_{ME}. Ce dernier (RC_{ME}) est sensiblement égal au régime en cours du second arbre A2, lequel conditionne le régime de rotation des roues (ici arrière). Comme illustré non limitativement sur l'exemple de la figure 2, cette première phase P1 peut se faire en régulant le régime R_{ME} de la machine ME à partir d'un instant t1, jusqu'à ce qu'il devienne sensiblement égal au régime de consigne RC_{ME} à un instant t2.

Dans une deuxième phase P2 on agit sur les moyens de couplage MC afin qu'ils débutent un couplage avec le second arbre A2. Comme illustré non limitativement sur l'exemple de la figure 2, et lorsque les moyens de couplage MC comprennent le synchroniseur décrit ci-avant, cette deuxième phase P2 peut se faire en translatant légèrement le manchon par rapport au moyeu (grâce à une translation de la fourchette F par changement de la position P_{A} de son actionneur A) entre les instants t2 et t3, afin de contraindre le mécanisme d'armement à translater la bague de synchronisation pour la coupler à la couronne à crabots du pignon afin de la synchroniser avec le second arbre A2. On notera que dans cette deuxième phase P2 on continue de réguler le régime R_{ME} de la machine ME, et la synchronisation provoque une variation du couple C_{ME} délivré par la machine ME au premier arbre A1.

Dans la première étape (i), le fonctionnement de la machine ME et l'action sur les moyens de couplage MC sont contrôlés au moyen d'instructions qui sont déterminées et délivrées par le dispositif (de contrôle) D.

La seconde étape (ii) est destinée à faire fonctionner la machine ME afin qu'elle fournisse un couple de consigne choisi CC et à agir sur les moyens de couplage MC afin qu'ils établissent un couplage entre les premier A1 et second A2 arbres. Ici également, le fonctionnement de la machine ME et l'action sur les moyens de couplage MC sont contrôlés au moyen d'instructions (ou d'ordres) qui sont déterminé(e)s et délivré(e)s par le dispositif (de contrôle) D.

Le couple de consigne CC est choisi par le dispositif D en fonction d'instructions et/ou de données fournies par le superviseur SC. Il est par exemple propre à compenser un couple de trainée (ou de frottement) de la machine ME qui est estimé par le dispositif D en fonction du régime de la machine ME.

Si le couple de consigne choisi CC est adapté à la situation en cours, et donc que l'estimation du couple de trainée CTₑ est correcte, le couplage se déroule sans problème.

En revanche, si le couple de consigne choisi CC est inadapté à la situation en cours, et donc que le couple de trainée CTₑ a été surestimé ou sous-estimé, les moyens de couplage MC ne parviennent pas à établir le couplage entre les premier A1 et second A2 arbres. Le dispositif D peut, par exemple, détecter qu'une telle situation existe durant une seconde étape (ii) lorsqu'ils reçoivent des données représentatives d'un arrêt de déplacement d'un élément participant à l'action sur les moyens de couplage MC. Par exemple, cet élément peut être l'actionneur A de la fourchette F qui est couplée au synchroniseur MC, ou bien cette dernière fourchette F. Ces données peuvent être fournies par un détecteur de position DP qui est couplé à l'élément précité. Par exemple, ce détecteur de position DP peut être agencé pour déterminer une position en cours P_{A} selon une période qui est typiquement et non limitativement comprise entre environ 2 ms et environ 10 ms.

On notera que dans l'exemple non limitatif illustré sur la figure 1, le détecteur de position DP est chargé de déterminer la position en cours P_{A} de l'actionneur A. Mais dans une variante de réalisation non illustrée, il pourrait être chargé de déterminer la position en cours de la fourchette F.

La situation d'arrêt de déplacement est détectée pendant une troisième phase P3 qui est illustrée sur la figure 2 et qui survient entre les instants t3 et t4. On peut en effet constater sur le diagramme du haut de la figure 2 que très peu de temps après l'instant t3 la position P_{A} de l'actionneur A de la fourchette F ne varie plus, ce qui signifie qu'il est bloqué légèrement au-delà de sa position intermédiaire de synchronisation P_{S}, mais largement avant sa position finale d'engagement P_{E}. On notera que pendant la troisième phase P3 le régime R_{ME} de la machine ME varie alors que le couple C_{ME} délivré par la machine ME au premier arbre A1 est sensiblement constant et égal au couple de trainée estimé CTₑ.

Lorsqu'une situation d'arrêt de déplacement est détectée (ici à l'instant t4), on effectue une quatrième phase P4 dans laquelle on ajoute au couple de consigne CC un couple additionnel CA qui varie soit de façon monotone décroissante à partir d'une valeur positive choisie, soit de façon monotone croissante à partir d'une valeur négative choisie, jusqu'à ce que le couple C_{ME} fourni par la machine ME permette une reprise du couplage (à un instant t5). On comprendra que pour que le couplage reprenne et se termine, il faut que le couple C_{ME} fourni par la machine ME soit sensiblement égal au couple de trainée réel CTᵣ de cette dernière (ME). Puis, dans une cinquième phase P5, on maintient sensiblement constant ce couple fourni C_{ME} (sensiblement égal à CTᵣ) jusqu'à ce que le couplage soit effectivement terminé (à un instant t6).

On considère ici que le couplage est effectivement terminé lorsque l'élément d'action (ici l'actionneur A), dont la position P_{A} fait l'objet d'une détermination, a atteint sa position finale d'engagement P_{E}.

En ajoutant au couple de consigne CC un couple additionnel CA variant de façon monotone décroissante à partir d'une valeur positive choisie ou bien de façon monotone croissante à partir d'une valeur négative choisie, alors même que l'on ne sait pas si ce couple de consigne CC est surestimé ou sous-estimé, on est certain de parvenir rapidement à une valeur de couple fourni C_{ME} qui est sensiblement égale au couple de trainée réel CTᵣ, et ainsi de permettre la poursuite et la fin du couplage.

On notera que le dispositif D peut être configuré de manière à systématiquement utiliser un couple additionnel CA qui varie de façon monotone décroissante à partir d'une valeur positive choisie, ou bien de manière à systématiquement utiliser un couple additionnel CA qui varie de façon monotone croissante à partir d'une valeur négative choisie. Dans le premier cas, on part d'un nouveau couple de consigne qui est égal au couple de consigne CC augmenté de la valeur choisie afin de surestimer volontairement ce couple de consigne CC, puis on diminue de façon monotone la valeur de ce nouveau couple de consigne. Dans le second cas (illustré non limitativement dans le diagramme du bas de la figure 2), on part d'un nouveau couple de consigne qui est égal au couple de consigne CC diminué de la valeur absolue de la valeur choisie afin de sous-estimer volontairement ce couple de consigne CC, puis on augmente de façon monotone la valeur de ce nouveau couple de consigne.

On notera, comme illustré non limitativement sur la figure 2 (dans le diagramme du bas), que dans la seconde étape (ii) on peut faire varier le couple additionnel CA selon une pente qui est sensiblement constante, jusqu'à atteindre une valeur maximale choisie. Dans ce cas, la pente peut éventuellement varier en fonction du couple de consigne CC, et donc de la valeur du couple de trainée estimé CTₑ.

Mais dans une variante non illustrée, la pente précitée pourrait ne pas être sensiblement constante, dès lors qu'elle est monotone.

Dans une variante de réalisation non illustrée, on peut faire varier le couple additionnel CA par incrémentation d'un incrément choisi. La pente varie alors par sauts égaux à l'incrément. Dans ce cas, l'incrément peut éventuellement varier en fonction du couple de consigne CC, et donc de la valeur du couple de trainée estimé CTₑ.

On notera également que la valeur choisie (positive ou négative) qui constitue la toute première valeur du couple additionnel CA (avant qu'il ne varie de façon monotone) peut éventuellement varier en fonction du couple de consigne CC, et donc de la valeur du couple de trainée estimé CTₑ.

L'invention offre plusieurs avantages, parmi lesquels :
- une garantie de couplage entre les premier et second arbres, y compris lorsque le couple de consigne n'est pas correctement estimé,
- une diminution du temps de conception des moyens de couplage du fait que leur surdimensionnement n'est plus nécessaire,
- une réduction du coût de fabrication des moyens de couplage, notamment du fait que leur capacité de dévirage peut être réduite,
- une diminution du temps de conception de l'actionneur et de la fourchette du fait que leur surdimensionnement n'est plus nécessaire,
- une réduction du coût de fabrication de l'actionneur et de la fourchette, notamment du fait que leur capacité à fournir des efforts peut être réduite,
- une diminution du temps d'étude nécessaire à la détermination en usine ou en laboratoire des couples de trainée estimés.

## Revendications

1. Procédé de contrôle du couplage, par des moyens de couplage (MC) d'un véhicule (V), d'un premier arbre (A1), entraîné par une machine (ME) associée à des moyens de stockage d'énergie (MS) et produisant un couple, à un second arbre (A2), propre à entraîner en rotation des roues dudit véhicule (V), ledit procédé comprenant une étape (i) dans laquelle on fait fonctionner ladite machine (ME) afin qu'elle entraîne ledit premier arbre (A1) selon sensiblement un régime de consigne, puis on agit sur lesdits moyens de couplage (MC) afin qu'ils débutent un couplage avec ledit second arbre (A2), et une étape (ii) dans laquelle on fait fonctionner ladite machine (ME) afin qu'elle fournisse un couple de consigne choisi et l'on agit sur lesdits moyens de couplage (MC) afin qu'ils établissent un couplage entre lesdits premier (A1) et second (A2) arbres, **caractérisé en ce que** dans ladite étape (ii), lorsque lesdits moyens de couplage (MC) ne parviennent pas à établir ledit couplage, on ajoute audit couple de consigne un couple additionnel variant soit de façon monotone décroissante à partir d'une valeur positive choisie, soit de façon monotone croissante à partir d'une valeur négative choisie, jusqu'à ce que le couple fourni permette une reprise dudit couplage, puis on maintient sensiblement constant ce couple fourni jusqu'à ce que ledit couplage soit effectivement terminé.

2. Procédé selon la revendication 1, **caractérisé en ce que** dans ladite étape (ii) on utilise un couple de consigne propre à compenser un couple de trainée estimé de ladite machine (ME).

3. Procédé selon l'une des revendications 1 et 2, **caractérisé en ce que** dans ladite étape (ii) on fait varier ledit couple additionnel selon une pente sensiblement constante.

4. Procédé selon la revendication 3, **caractérisé en ce que** dans ladite étape (ii) ladite pente varie en fonction dudit couple de consigne.

5. Procédé selon l'une des revendications 1 et 2, **caractérisé en ce que** dans ladite étape (ii) on fait varier ledit couple additionnel par incrémentation d'un incrément choisi.

6. Procédé selon la revendication 5, **caractérisé en ce que** dans ladite étape (ii) ledit incrément varie en fonction dudit couple de consigne.

7. Procédé selon l'une des revendications 1 à 6, **caractérisé en ce que** dans ladite étape (ii) ladite valeur choisie varie en fonction dudit couple de consigne.

8. Procédé selon l'une des revendications 1 à 7, **caractérisé en ce que** dans ladite étape (ii) on détecte que lesdits moyens de couplage (MC) ne parviennent pas à établir ledit couplage en cas de réception de données représentatives d'un arrêt de déplacement d'un élément participant à l'action sur lesdits moyens de couplage (MC).

9. Dispositif (D) pour contrôler le couplage, par des moyens de couplage (MC) d'un véhicule (V), d'un premier arbre (A1), entraîné par une machine (ME) associée à des moyens de stockage d'énergie (MS) et produisant un couple, à un second arbre (A2), propre à entraîner en rotation des roues dudit véhicule (V), ledit dispositif (D) étant agencé pour délivrer des instructions propres à faire fonctionner ladite machine (ME) de sorte qu'elle entraîne ledit premier arbre (A1) selon sensiblement un régime de consigne, puis à déclencher une action sur lesdits moyens de couplage (MC) propre à les faire débuter un couplage avec ledit second arbre (A2), puis à faire fonctionner ladite machine (ME) de sorte qu'elle fournisse un couple de consigne choisi et à déclencher une action sur lesdits moyens de couplage (MC) propre à les faire établir un couplage entre lesdits premier (A1) et second (A2) arbres, **caractérisé en ce qu'**il est en outre agencé, lorsque lesdits moyens de couplage (MC) ne parviennent pas à établir ledit couplage, pour imposer un ajout audit couple de consigne d'un couple additionnel variant soit de façon monotone décroissante à partir d'une valeur positive choisie, soit de façon monotone croissante à partir d'une valeur négative choisie, jusqu'à ce que le couple fourni permette une reprise dudit couplage, puis pour ordonner un maintien sensiblement constant de ce couple fourni jusqu'à ce que ledit couplage soit effectivement terminé.

10. Véhicule (V) comprenant un premier arbre (A1) entraîné par une machine (ME) associée à des moyens de stockage d'énergie (MS) et produisant un couple, un second arbre (A2) propre à entraîner en rotation des roues, et des moyens de couplage (MC) propres à coupler ledit premier arbre (A1) audit second arbre (A2), **caractérisé en ce qu'**il comprend en outre un dispositif de contrôle (D) selon la revendication 9.

## Patentansprüche

1. Verfahren zur Steuerung des Koppelns durch Kopplungsmittel (MC) eines Fahrzeugs (V) einer ersten Welle (A1), die von einer Maschine (ME) angetrieben wird, die mit Energiespeichermitteln (MS) verbunden ist und ein Drehmoment erzeugt, mit einer zweiten Welle (A2), die dazu geeignet ist, Räder des Fahrzeugs (V) in Drehung anzutreiben, wobei das Verfahren einen Schritt (i) umfasst, bei dem man die Maschine (ME) funktionieren lässt, damit sie die erste Welle (A1) gemäß im Wesentlichen einer Solldrehzahl antreibt, man dann auf die Kopplungsmittel (MC) einwirkt, damit sie ein Koppeln mit der zweiten Welle (A2) beginnen, und einen Schritt (ii), bei dem man die Maschine (ME) funktionieren lässt, damit sie ein ausgewähltes Solldrehmoment liefert und man auf die Kopplungsmittel (MC) einwirkt, damit sie ein Koppeln zwischen der ersten (A1)und der zweiten (A2) Welle herstellen, **dadurch gekennzeichnet, dass** der Schritt (ii), wenn es den Kopplungsmitteln (MC) nicht gelingt, die Kopplung herzustellen, dem Solldrehmoment ein zusätzliches Drehmoment zugibt, das entweder ausgehend von einem ausgewählten positiven Wert monoton sinkend, oder ausgehend von einem ausgewählten negativen Wert monoton zunehmend variiert, bis das gelieferte Drehmoment eine Wiederaufnahme des Koppelns erlaubt, man dann dieses gelieferte Drehmoment im Wesentlichen konstant hält, bis das Koppeln effektiv abgeschlossen ist.

2. Verfahren nach Anspruch 1, **dadurch gekennzeichnet, dass** man bei dem Schritt (ii) ein Solldrehmoment verwendet, das geeignet ist, um ein geschätztes Widerstandsmoment der Maschine (ME) zu kompensieren.

3. Verfahren nach einem der Ansprüche 1 und 2, **dadurch gekennzeichnet, dass** man bei dem Schritt (ii) das zusätzliche Drehmoment gemäß einer im Wesentlichen konstanten Steigung variieren lässt.

4. Verfahren nach Anspruch 3, **dadurch gekennzeichnet, dass** die Steigung bei dem Schritt (ii) in Abhängigkeit von dem Solldrehmoment variiert.

5. Verfahren nach einem der Ansprüche 1 und 2, **dadurch gekennzeichnet, dass** man bei dem Schritt (ii) das zusätzliche Drehmoment durch Inkrementieren mit einem ausgewählten Inkrement variieren lässt.

6. Verfahren nach Anspruch 5, **dadurch gekennzeichnet, dass** das Inkrement bei dem Schritt (ii) in Abhängigkeit von dem Solldrehmoment variiert.

7. Verfahren nach einem der Ansprüche 1 bis 6, **dadurch gekennzeichnet, dass** der ausgewählte Wert bei dem Schritt (ii) in Abhängigkeit von dem Solldrehmoment variiert.

8. Verfahren nach einem der Ansprüche 1 bis 7, **dadurch gekennzeichnet, dass** man bei dem Schritt (ii) erfasst, dass es den Kopplungsmitteln (MC) nicht gelingt, das Koppeln in dem Fall von Empfang von Daten, die einen Bewegungsstillstand eines Elements darstellen, das an der Aktion auf die Kopplungsmittel (MC) teilnimmt, herzustellen.

9. Vorrichtung (D) zur Steuerung des Koppelns durch Kopplungsmittel (MC) eines Fahrzeugs (V) einer ersten Welle (A1), die von einer Maschine (ME) angetrieben wird, die mit Energiespeichermitteln (MS) verbunden ist und ein Drehmoment erzeugt, mit einer zweiten Welle (A2), die dazu geeignet ist, Räder des Fahrzeugs (V) in Drehung anzutreiben, wobei die Vorrichtung (D) eingerichtet ist, um Anweisungen zu liefern, die geeignet sind, um die Maschine (ME) derart funktionieren zu lassen, dass sie die erste Welle (A1) gemäß im Wesentlichen einer Solldrehzahl antreibt, dann eine Aktion auf die Kopplungsmittel (MC) auszulösen, die geeignet ist, ein Koppeln mit der zweiten Welle (A2) beginnen zu lassen, und die Maschine (ME) dann derart funktionieren zu lassen, dass sie ein ausgewähltes Solldrehmoment liefert, und eine Aktion auf die Kopplungsmittel (MC) auszulösen, die geeignet ist, sie eine Kopplung zwischen der ersten (A1) und der zweiten (A2) Welle herstellen zu lassen, **dadurch gekennzeichnet, dass** sie außerdem eingerichtet ist, um, wenn es den Kopplungsmitteln (MC) nicht gelingt, die Kopplung herzustellen, ein Beigeben zu dem Solldrehmoment eines zusätzlichen Drehmoments aufzuerlegen, das entweder ausgehend von einem ausgewählten positiven Wert monoton sinkend, oder ausgehend von einem ausgewählten negativen Wert monoton zunehmend ist, bis das gelieferte Drehmoment eine Wiederaufnahme des Koppelns erlaubt, man dann dieses gelieferte Drehmoment im Wesentlichen konstant hält, bis das gelieferte Drehmoment ein Wiederaufnehmen des Koppelns erlaubt, um dann ein im Wesentlichen konstantes Aufrechterhalten dieses gelieferten Drehmoments anzuordnen, bis das Koppeln effektiv abgeschlossen ist.

10. Fahrzeug (V), das eine Welle (A1) umfasst, die von einer Maschine (ME) angetrieben wird, die mit Energiespeichermitteln (MS) verbunden ist und ein Drehmoment erzeugt, eine zweite Welle (A2), die geeignet ist, Räder in Drehung anzutreiben, und Kopplungsmittel (MC), die geeignet sind, die erste Welle (A1) mit der zweiten Welle (A2) zu koppeln, **dadurch gekennzeichnet, dass** es außerdem eine Steuervorrichtung (D) nach Anspruch 9 umfasst.

## Claims

1. A method for controlling the coupling, by coupling means (MC), of a vehicle (V), of a first shaft (A1) driven by a machine (ME) associated with energy storage means (MS) and producing a torque, to a second shaft (A2), suitable for driving in rotation wheels of said vehicle (V), said method including a step (i) in which said machine (ME) is operated so that it drives said first shaft (A1) at substantially a set speed, then said coupling means (MC) are acted upon so that they start a coupling with said second shaft (A2), and a step (ii) in which said machine (ME) is operated so that it provides a selected set torque and said coupling means (MC) are acted upon so that they establish a coupling between said first (A1) and second (A2) shafts, **characterized in that** in said step (ii), when said coupling means (MC) are not able to establish said coupling, an additional torque is added to said torque, varying either in a decreasing monotone manner from a selected positive value, or in an increasing monotone manner from a selected negative value, until the provided torque permits a resumption of said coupling, then this provided torque is maintained substantially constant until said coupling is effectively terminated.

2. The method according to Claim 1, **characterized in that** in said step (ii) a set torque is used which is suited to compensating an estimated drag torque of said machine (ME).

3. The method according to one of Claims 1 and 2, **characterized in that** in said step (ii) said additional torque is varied according to a substantially constant gradient.

4. The method according to Claim 3, **characterized in that** in said step (ii) said gradient varies as a function of said set torque.

5. The method according to one of Claims 1 and 2, **characterized in that** in said step (ii) said additional torque is varied by incrementation of a selected increment.

6. The method according to Claim 5, **characterized in that** in said step (ii) said increment varies as a function of said set torque.

7. The method according to one of Claims 1 to 6, **characterized in that** in said step (ii) said selected value varies as a function of said set torque.

8. The method according to one of Claims 1 to 7, **characterized in that** in said step (ii) it is detected that said coupling means (MC) are not able to establish said coupling in the case of reception of data representative of a stoppage of movement of an element taking part in the action on said coupling means (MC).

9. A device (D) for controlling the coupling, by coupling means (MC), of a vehicle (V), of a first shaft (A1), driven by a machine (ME) associated with energy storage means (MS) and producing a torque, to a second shaft (A2), able to drive wheels of said vehicle (V) in rotation, said device (D) being arranged to deliver instructions able to operate aid machine (ME) such that it drives said first shaft (A1) substantially at a set speed, then to trigger an action on said coupling means (MC) able to cause them to start a coupling with said second shaft (A2), then to operate said machine (ME) such that it provides a selected set torque and to trigger an action on said coupling means (MC) able to cause them to establish a coupling between said first (A1) and second (A2) shafts, **characterized in that** it is arranged, furthermore, when said coupling means (MC) are not able to establish said coupling, to impose an addition to said set torque of an additional torque varying either in a decreasing monotone manner from a selected positive value, or in an increasing monotone manner from a selected negative value, until the provided torque permits a resumption of said coupling, then to order a substantially constant maintaining of this provided torque until said coupling is effectively terminated.

10. A vehicle (V) including a first shaft (A1) driven by a machine (ME) associated with energy storage means (MS) and producing a torque, a second shaft (A2) able to drive wheels in rotation, and coupling means (MC) able to couple said first shaft (A1) to said second shaft (A2), **characterized in that** it further includes a control device (D) according to Claim 9.
